(19) Europäisches Patentamt
European Patent Office
Office européen des brevets

(11) **EP 3 794 921 B1**

(12) **EUROPEAN PATENT SPECIFICATION**

(45) Date of publication and mention
of the grant of the patent:
**06.12.2023   Bulletin 2023/49**

(21) Application number: **20197501.8**

(22) Date of filing: **22.09.2020**

(51) International Patent Classification (IPC):
**A01D 34/00** (2006.01)

(52) Cooperative Patent Classification (CPC):
**A01D 34/008; G01S 13/931; G05D 1/0257;**
G05D 2201/0208

(54) **LAWN MOWER ROBOT AND CORRESPONDING PROCESS**

RASENMÄHERROBOTER UND ENTSPRECHENDES VERFAHREN

ROBOT POUR TONDRE LE GAZON ET PROCÉDÉ CORRESPONDANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **23.09.2019   IT 201900016946**

(43) Date of publication of application:
**24.03.2021   Bulletin 2021/12**

(73) Proprietor: **Bernini, Fabrizio
52021 Bucine - Arezzo (IT)**

(72) Inventor: **Bernini, Fabrizio
52021 Bucine - Arezzo (IT)**

(74) Representative: **Milli, Simone
Bugnion S.p.A.
Viale A. Gramsci 42
50132 Firenze (IT)**

(56) References cited:
**WO-A1-2014/007728      WO-A1-2015/064780
WO-A1-2016/057140      WO-A1-2017/085132
WO-A1-2018/199824**

**Description**

This invention relates to the technical sector of automatic gardening devices, in particular lawn mower devices with substantially autonomous movement (as in WO 2016/057140 A1).

The lawn mower devices are used to keep lawns, gardens and grassy areas in general in optimum conditions, that is to say, for keeping the grass below a certain height in a substantially homogeneous manner over the entire cutting area.

Lawn mower robots of known type usually comprise a load-bearing frame, generally having an outer body, to which are associated cutting means for the maintenance of lawn, means for moving the robot for moving the robot inside a working area, a system for detecting obstacles along the trajectories of movement and a system for detecting the presence of grass in the area affected by the cutting means.

To allow the movement of the robot inside the working area, guaranteeing at the same time that it does not escape, it is known to install a perimeter wire which delimits the space inside of which the robot can move. When the robot moves towards the perimeter wire, suitable sensors detect the presence indicating that the boundary of the area inside which the cutting operation can/must be performed has been reached. Consequently, the robot modifies its feed direction thereby preventing escape from its operating area.

Moreover, it is always necessary to delimit with the perimeter wire all those obstacles present inside the work area which the robot must avoid, such as, for example, trees, shrubs, flower beds, swimming pools or furnishing elements for gardens.

It is therefore evident that this requirement is particularly onerous since it necessarily requires the installation of one or more perimeter wires positioned to delimit in a precise and accurate manner the space inside of which the robot can actually move and operate.

The possibility of using a video camera for detecting the presence of an object along a feed direction of the lawn mower is known. However, this solution has one or more drawbacks, for example a video camera is very sensitive to the variations in light and the actual detection of objects may depend on how much these are illuminated. Moreover, the video camera is particularly sensitive to dirt, for example the mud which can rise from the ground and cover the capturing surface of the video camera. In that sense, a continuous and constant maintenance of the video camera is necessary for correct operation.

One prior art solution comprises the use of infrared sensors, however this solution has one or more drawbacks; for example, a plurality of sensors is necessary for an effective detection of objects, the sensors greatly depend on the ambient conditions and, also in this case, the sensors must remain clean for a correct operation with consequent continuous maintenance.

In this context, the technical purpose which forms the basis of the invention is to provide a lawn mower robot which helps overcome one or more of the above-mentioned drawbacks of the prior art.

Document WO2016057140 shows a location estimation system for use with an autonomous lawn mowing robot, comprises a plurality of synthetic surfaces positioned with respect to a mowable space in an environment, a radiation source coupled to the lawn mowing robot, a detector coupled to the lawn mowing robot and configured to detect radiation reflected by objects in the environment, and a controller configured to controllably direct radiation from the radiation source to scan the environment, and to vary at least one of an output power of the directed radiation and a scan rate of the directed radiation, as a function of detected radiation reflected from one or more of the synthetic surfaces.

In particular, the aim of the invention is to provide a lawn mower robot which can be easily and quickly installed which is able to move inside the work area in a safe manner, avoiding the risk of striking any obstacles present inside it.

A further aim of the invention is to provide a lawn mower robot which comprises a sensor which is particularly robust with respect to the environment and to changes of light.

The technical purpose indicated and the aims specified are substantially achieved by a lawn mower robot comprising the technical features described in one or more of the appended claims.

Further features and advantages of this invention are more apparent in the detailed description below, with reference to a preferred, non-restricting, embodiment of a lawn mower robot as illustrated in the accompanying drawings, in which:

- Figures 1 to 6 schematically show aspects of a lawn mower robot in which are indicated the features according to the invention; and
- Figures 7 and 8 show signals as a function of the distance, according to one aspect of the invention.

In the accompanying drawings, the numeral 1 denotes a lawn mower robot according to the invention, which will be indicated below as robot 1.

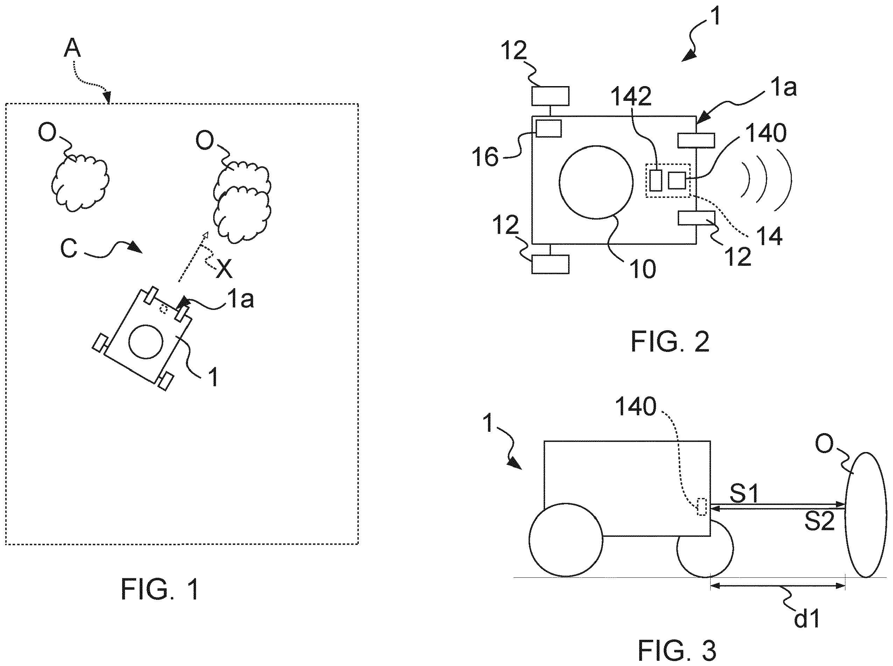

The robot 1, shown schematically in terms of its main components in Figures 1 to 3, is in particular a robot of the self-propelled type, that is to say, movable in a substantially autonomous manner along a feed direction "X" inside a work area "A", in particular for performing an operation for cutting grass present inside it.

As illustrated in Figure 2, the robot 1 comprises a frame for supporting the components of the robot 1. Coupled to the frame, the robot 1 comprises grass cutting means 10 facing towards the lawn, for example one or more blades, to perform operations for cutting the lawn inside the working area A.

The robot 1 also comprises movement means 12, coupled to the frame and configured for moving substantially autonomously the robot 1 along the feed direction X.

The movement means 12 may comprise a plurality of wheels.

Said movement means 12 are configured for moving the robot 1 inside the area of ground A, in particular along the working trajectory in a feed direction X.

Preferably, at least one is a drive wheel, and the movement means 12 comprise a rotation motor (not illustrated), operatively connected to said drive wheel.

Still more preferably, the movement means 12 comprise an orientation motor, not illustrated, operatively connected to at least one adjustable wheel of the plurality of wheels, that is to say, a wheel which is able to rotate about a substantially vertical axis of rotation.

The movement means 12 therefore perform the function of moving the robot 1 inside the area of ground A to be maintained.

More specifically, the drive wheels allow the forward movement along the working trajectory, whilst the adjustable wheels change the direction of said working trajectory when necessary (for example, when obstacles are detected along the working trajectory or the edges of the area to be maintained are reached).

By way of example, the power supply of the robot 1, both with regard to the movement means 12a and the cutting means 10, may be performed by electric motors, powered by a battery; the latter may be of the rechargeable type. Preferably, the battery may also power other electrical/electronic devices provided on the lawn mower robot 1. According to one or more embodiments, the lawn mower robot 1 may comprise an outer guard or cover, configured for covering and protecting the components of the lawn mower robot 1, for example from the weather conditions. The guard or cover may be made of plastic material. According to one aspect of this invention, the lawn mower robot 1 comprises a detection system 14 for detecting the presence of one or more objects O in a detection zone C in front of the lawn mower robot 1. The detection zone C may comprise an area around the feed direction X of the robot 1, for example close to being crossed by the robot 1.

As illustrated in Figure 3, the detection system 14 comprises at least one radar sensor 140, configured for transmitting a first electromagnetic signal S1, for example one or more electromagnetic pulses, and for receiving a second electromagnetic signal S2. If an object O is present close to the lawn mower robot 1, the first signal S1 may be reflected at the object O and the second electromagnetic signal S2 may comprise an echo of the first signal S1 reflected.

The electromagnetic signals may be in the radio wave range (for example frequency between 0 Hz and 300 GHz), more preferably in the microwave range (for example, frequency between 3 GHz and 300 GHz). Still more preferably, the electromagnetic signals may have a frequency of approximately 60 GHz.

According to one aspect, the system 14 for detecting objects O also comprises a processing module 142 coupled to the radar sensor 140. The processing module 142 is configured for:

- receiving from the radar sensor 140 the first and the second electromagnetic signal S1 and S2, and
- detecting a presence of an object O (in the detection zone C) checking whether the second electromagnetic signal S2 comprises the first electromagnetic signal S1, that is to say, if the radar sensor 140 receives the echo of the first signal S1 reflected at the object O.

The processing module 142 is configured for calculating a distance between the lawn mower robot 1 and the object O detected as a function of the first and second signals S1 and S2, if the second electromagnetic signal S2 comprises the first signal S1, that is, if the second signal S1 comprises the reflected echo of the first signal S1.

The radar sensor 140 can thus transmit the first signal S1 and receive the second signal S2. In the case illustrated in Figure 3, there is the object O at a distance d1, so that the second signal S2 comprises the echo of the first signal S1 reflected at the object O.

According to one aspect of the invention, the distance d1 between the object O and the lawn mower robot 1 can be calculated as a function of the speed of propagation c of the first signal S1 (in this case, the speed of light) and a flight time TOF, that is to say, a time which the first signal S1 takes to be transmitted by the radar sensor 140, to be reflected at the object O and received by the radar sensor 140. The distance d1 is thus calculated according to the following equation 1:

$$d1 = \frac{TOF * c}{2}$$

The detection system 14 may also comprise a filter (for example, a time mask), configured for filtering the second signal S2 received so as to detect objects O in a predetermined distance range D from the front surface 1a of the robot 1. The range D may preferably be between 6 cm and 70 cm, more preferably between 10 cm and 60 cm, even more preferably between 20 cm and 50 cm.

According to one or more embodiments, the lawn mower robot 1 may comprise a processing and control unit 16, configured for controlling the cutting means and/or the movement means 12. In particular, the processing and control unit 16 may be configured to control the movement means 12 and/or the cutting means as a function of the detected presence of the object O, optionally as a function of the distance d1 calculated between the robot 1 and the object O.

The processing and control unit 16 is coupled with or comprise the processing module 142 of the detection system.

According to one or more embodiments, the radar sensor 140 may be protected and covered by the guard or cover of the robot 1, for example it may be mounted on the frame (not visible in the drawing) inside the guard or cover. Advantageously, in this way the radar sensor 140 is not visible and remains covered by the cover of the robot 1, so as to prevent direct exposure to the surrounding environment. According to one aspect of the invention, the radar sensor 140 may be at a predetermined height H relative to the ground, preferably between 5 cm and 30 cm, even more preferably between 10 cm and 25 cm.

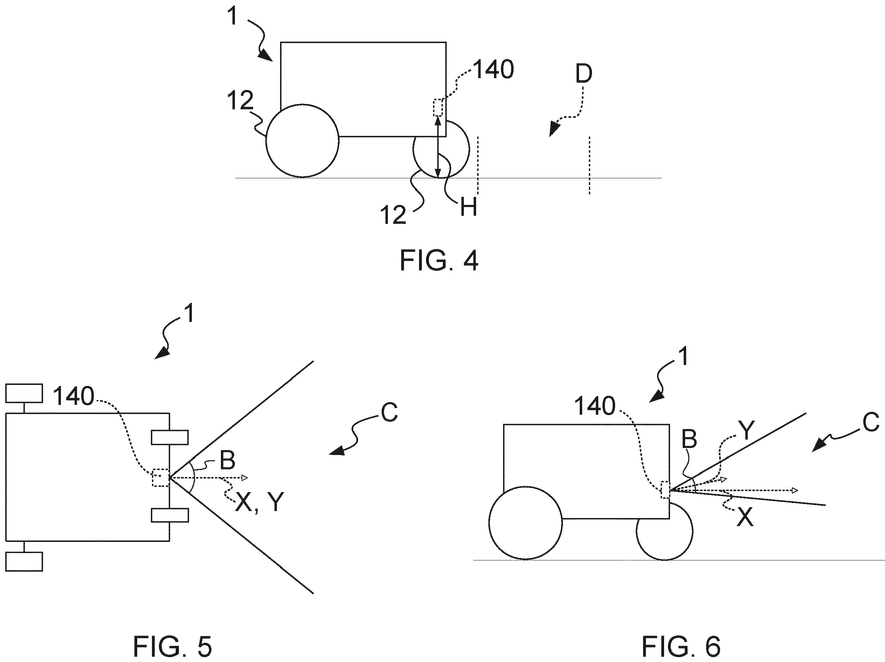

As illustrated in the schematic top and side views, respectively, of Figures 5 and 6, the detection system 14 may be configured for detecting the presence of one or more objects O at the detection zone C of the radar sensor 140 in front of the lawn mower robot 1.

According to one aspect of the invention, the radar sensor 140 has a main emission axis Y of the first signal S1, that is, a direction along which the power of the first signal S1 is mainly directed and concentrated. Preferably, as illustrated in the drawings, the main emission axis Y is parallel to the feed direction X or is inclined upwards (that is, in a direction opposite to the ground) by an emission angle E relative to the feed direction X. For example, the angle of emission E may be an angle of 12° relative to the feed direction X (parallel to the ground) upwards, as illustrated in Figure 6.

Advantageously, in this way it is possible to reduce the number and the amplitude of the return of the wave which strikes the ground and which could result in false measurements of objects.

According to one aspect, the radar sensor 140 comprises an angle of vision B, that is, an angle in which almost all of the power of emission of the first signal S1 is concentrated, so that the radar sensor 140 acts like a directional antenna. According to one aspect of the invention, the angle of vision B may be between 50° and 180°. For example, the angle of vision B may extend horizontally (that is, parallel to the ground) by 40° in both directions relative to the main axis of emission Y. For example, the angle of vision B may extend vertically (that is, substantially perpendicularly to the ground) by 30° in both directions relative to the main axis of emission Y.

In other words, the radar sensor 140 may examine the detection zone C inside the working area A in such a way as to monitor, in a preferably continuous manner, at least the portion of the working area A in front of the robot 1 in the feed direction X.

According to one or more embodiments, the processing module 142 is configured for calculating a distance between the lawn mower robot 1 and the object O detected as a function of the first and second signal S1, S2.

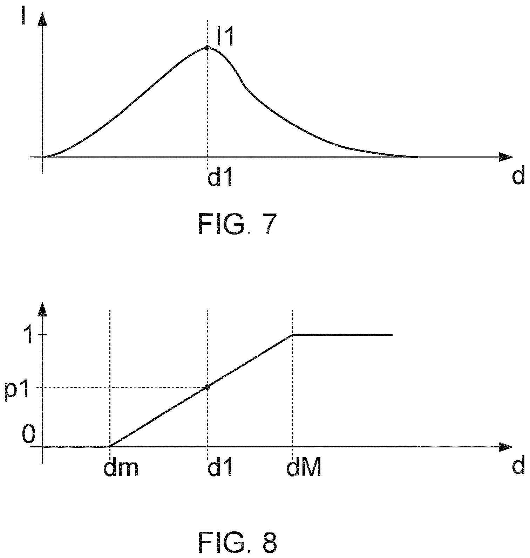

As illustrated in the non-limiting example of Figure 7, for detecting the presence of one or more objects checking whether the second signal S2 comprises the first signal S1, the processing module 142 is configured for:

- generating a convolution (I) of the first signal (S1) and of the second signal (S2), and
- identifying, in the convolution I, one or more local peaks I1 (signal amplitude peaks), where each local peak may indicate an object O detected close to the lawn mower robot 1.

For example, the processing module 142 may be configured to generate a convolution between the first signal S1 and the second signal S2 as a function of the flight time TOF, whose peaks represent one or more objects detected.

As illustrated in the non-limiting example of Figure 7, the processing module 142 is configured for:

- generating a convolution I of the first signal S1 and of the second signal S2, as a function of the distance d, and
- identifying, in the convolution I, one or more local peaks I1 and one or more corresponding distances d1.

In other words, the processing module 142 may be configured to generate a convolution between the first signal S1 and the second signal S2 as a function of the distance d, starting from a convolution of the above-mentioned signals as a function of the flight time TOF, where at each instant a corresponding distance d is associated according to the equation 1.

According to one or more embodiments, if an object O is detected close to the lawn mower robot 1, the processing and control unit 16 may be configured to control the cutting means 10 and/or the movement means 12 as a function of the detected presence of at least one object O. For example, the cutting means 10 and/or the movement means 12 may be controlled as a function of the distance d1 from the object O detected. The processing and control unit 16 can adjust the speed, for example slowing down or stopping or making a change of direction a, of the movement means 12 of the lawn mower robot 1 and/or it can activate or deactivate the cutting means 10.

According to one aspect, the processing and control unit 16 is configured for:

- receiving the distance d1 between a detected object O and the lawn mower robot 1 (in the case of several objects O detected, optionally receive the distance d1 with a smaller value),
- calculating an adjustment parameter p1 as a function of the distance d1, and
- adjusting a speed of the movement means (12) as a function of the adjustment parameter (p1).

As illustrated in Figure 8, the parameter p1 may vary between a lower value, for example 0 in the non-limiting example illustrated, and an upper value, for example 1 in the non-limiting example illustrated. The adjustment parameter p1 can be used for weighing a signal for driving the movement means 12. For example, in the case illustrated, the signal for driving the movement means 12 may be multiplied by the adjustment parameter p1.

As illustrated in the non-limiting example, the adjustment parameter p1 may have a greater value if the distance d1 between the object O and the lawn mower robot 1 is greater than or equal to a greater distance dM. In this case, the signal for driving the movement means 12 is not affected by the parameter p1 and the speed of the movement means 12 remains unchanged.

The regulating parameter p1 may have a lower value if the distance d1 between the object O and the lawn mower robot 1 is less than or equal to a lower distance dm. In this case, the control signal becomes zero, the speed of movement of the movement means 12 is zero and the lawn mower robot 1 stops.

Between the lower distance dm and the upper distance dM and, therefore, between the lower and upper values, the adjustment parameter p1 may have a linear trend, as shown in the non-limiting example of Figure 8. In this way, a variation in the speed of movement of the movement means 12 may occur in a gradual fashion. Advantageously, this makes it possible to avoid sudden accelerations or decelerations of the robot 1.

Following the stopping of the robot 1 because an object O is detected along the feed direction X, the processing and control unit 16 may be configured for:

- controlling the movement means 12 for moving the robot 1 in a direction opposite to the feed direction X,
- modifying the feed direction X by a predetermined angle, and
- controlling the movement means 12 for moving the robot 1 towards the modified feed direction X.

If the robot 1 is stationary, all the objects O at the same radial distance from the robot 1 appear like the same object, that is to say, it is not possible to determine an angle of origin of the echo of the first signal S1.

If the robot 1 is moving at a constant speed, it is possible to measure an angle of origin of the echo of the first signal S1 reflected at an object O, using the Doppler effect, with the angle of origin which indicates a position of the at least one object O inside said working area A. The Doppler effect is a phenomenon such that a wave reached by one object moving relative to another has a change of frequency with respect to the original frequency value of the wave. In particular, the processing and control unit 16 may be configured for:

- detecting a frequency variation of a frequency of the second signal (S2) with respect to a frequency of the first signal (S1), and
- calculating the angle of origin of the second signal S2 as a function of said frequency variation measured.

Another aspect of the invention refers to a process for detecting the presence of at least one object O at a surface S in front of a lawn mower robot 1 comprising a radar sensor 140 according to one or more embodiments described above. The process comprises:

- transmitting a first electromagnetic signal S1, for example a plurality of pulses,
- receiving a second electromagnetic signal (S2), and
- detecting a presence of an object O checking whether the second signal S2 comprises said first signal S1, that is, if the second signal S2 comprises an echo of the first signal S1 reflected at an object O.

The process may comprise, for detecting the presence of an object O, generating a convolution I of the first signal S1 and of the second signal S2, and identifying, in the convolution I, at least one local peak I1. Each local peak may represent an object O at the lawn mower robot 1.

The process may comprise calculating a distance d1 between the lawn mower robot 1 and the object O detected as a function of the first S1 and second S2 signal, if the second signal S2 comprises the first signal S1, that is to say, if the radar sensor 140 receives the echo of the first signal S1.

The process comprises generating the convolution I between the first signal S1 and the second signal S2 as a function of the distance d, and identifying, in the convolution I, at least one local peak I1 and at least one corresponding distance d1.

The process may comprise controlling the movement means 12 and/or the cutting means 10 as a function of the detected presence of at least one object O and optionally also as a function of the distance d1 calculated. For example, controlling the cutting means 10 and/or the movement means 12 may comprise adjusting the activation and/or the deactivation of the cutting means 10 and/or adjusting the speed of the movement means 12.

The process may comprise calculating an adjustment parameter p1 as a function of the distance d1 calculated, and adjusting a speed of the movement means 12 as a function of the adjustment parameter p1. According to one aspect, the step of adjusting the speed of the movement means 12 as a function of the adjustment parameter p1 may comprise weighing a signal for driving the movement means 12 with the adjustment parameter p1, preferably multiplying the signal for driving the movement means 12 by the adjustment parameter p1.

According to one aspect, the parameter p1 varies in a linear fashion between a lower value and an upper value, such that a variation in the speed of the movement means 12 may occur in a gradual fashion.

The process may comprise:

- detecting a frequency variation of a frequency of the second signal (S2) with respect to a frequency of the first signal (S1), and

- calculating an angle of origin of the second signal (S2) as a function of the frequency variation measured, the angle of origin indicating a position of the at least one object (O) inside said working area (A). Advantageously, the lawn mower robot and the corresponding method described herein makes it possible to control the movement of a lawn mower robot 1 inside a working area A in an accurate and precise manner without requiring complex operations for installing and preparing the working area A.

In particular, the lawn mower robot and the corresponding method allow the presence of obstacles on the lawn to be maintained to be detected in a particularly reliable and simple manner.

Advantageously, the lawn mower robot and the corresponding method described herein allow a lawn mower robot to be provided which comprises a sensor which is particularly robust with respect to the environment and to changes of light.

**Claims**

1. A lawn mower robot (1), comprising:

- grass cutting means (10) for performing an operation for cutting grass in a working area (A),
- movement means (12) configured for moving substantially autonomously the lawn mower robot (1) along a feed direction (X) inside said working area (A),
- a detection system (14) configured for detecting the presence of at least one object (O) in a detection zone (C) in front of the lawn mower robot (1), and comprising:

- a radar sensor (140) configured for transmitting a first electromagnetic signal (S1) and for receiving a second electromagnetic signal (S2), and
- a processing module (142), coupled to the radar sensor (140) and configured to receive from the radar sensor (140) said first (S1) and said second (S2) signal, and to detect a presence of an object (O) checking whether the second signal (S2) comprises said first signal (S1),

the lawn mower robot (1) being **characterized in that** said processing module (142) is configured for:

- generating a convolution (I) of the first signal (S1) and of the second signal (S2),
- identifying, in the convolution (I), at least one local peak (11),
- calculating a distance (d1) between the lawn mower robot (1) and the object (O) detected as a function of the first (S1) and second (S2) signal, if the second signal (S2) comprises said first signal (S1),
- generating said convolution (I) as a function of the distance (d), and
- identifying, in the convolution (I), at least one local peak (11) and at least one corresponding distance (d1), the lawn mower robot (1) further comprising a processing and control unit (16), coupled to or comprising the processing module (142), the processing and control unit (16) being configured to control the movement means (12) and/or the cutting means (10) as a function of the detected presence of at least one object (O), wherein the processing and control unit (16) is configured for:
- calculating an adjustment parameter (p1) as a function of the distance (d1) calculated, and
- adjusting a speed of the movement means (12) as a function of the adjustment parameter (p1) by weighing a signal for driving the movement means (12) with the adjustment parameter (p1), multiplying said signal for driving the movement means (12) by the adjustment parameter (p1), and/or said parameter (p1) varying in a linear fashion between a lower value and an upper value, such that a variation in the speed of the movement means (12) occurs in a gradual fashion.

2. The lawn mower robot (1) according to claim 1, comprising a guard or cover configured to protect and cover, between the components of the robot (1), said radar sensor (140).

3. The lawn mower robot (1) according to any one of the preceding claims, wherein the processing and control unit (16) is configured for:

- detecting a frequency variation of a frequency of the second signal (S2) with respect to a frequency of the first signal (S1), and
- calculating an angle of origin of the second signal (S2) as a function of said frequency variation measured, the angle of origin indicating a position of the at least one object (O) inside the working area (A).

4. A process for detecting the presence of at least one object (O) in a detection zone (C) in front of a lawn mower robot (1) according to any one of the preceding claims, comprising a radar sensor (140), the process comprising:

- transmitting a first electromagnetic signal (S1),
- receiving a second electromagnetic signal (S2), and
- detecting a presence of an object (O) checking whether the second signal (S2) comprises said first signal (S1),
- generating a convolution (I) of the first signal (S1) and of the second signal (S2),
- identifying, in the convolution (I), at least one local peak (11),
- calculating a distance (d1) between the lawn mower robot (1) and the object (O) detected as a function of the first (S1) and second (S2) signal, if the second signal (S2) comprises said first signal (S1),
- generating said convolution (I) as a function of the distance (d), and
- identifying, in the convolution (I), at least one local peak (11) and at least one corresponding distance (d1).

**Patentansprüche**

1. Rasenmäherroboter (1), umfassend:

- Grasschneidemittel (10) zum Durchführen eines Vorgangs zum Schneiden von Gas in einem Arbeitsbereich (A);
- Bewegungsmittel (12), die ausgelegt sind, um den Rasenmäherroboter (1) entlang einer Zuführungsrichtung (X) im Arbeitsbereich (A) im Wesentlichen autonom zu bewegen;
- ein Erkennungssystem (14), das ausgelegt ist, um die Anwesenheit von mindestens einem Gegenstand (O) in einem Erkennungsbereich (C) vor dem Rasenmäherroboter (1) zu erkennen, und umfassend:

  - einen Radarsensor (140), der ausgelegt ist, um ein erstes elektromagnetische Signal (S1) zu übermitteln und um ein zweites elektromagnetische Signal (S2) zu empfangen, und
  - ein Verarbeitungsmodul (142), das mit dem Radarsensor (140) gekoppelt und ausgelegt ist, um vom Radarsensor (140) das erste (S1) und das zweite (S2) Signal zu empfangen und um eine Anwesenheit eines Gegenstands (O) zu erkennen und zu prüfen, ob das zweite Signal (S2) das erste Signal (S1) umfasst,

wobei der Rasenmäherroboter (1) **dadurch gekennzeichnet ist, dass** das Verarbeitungsmodul (142) ausgelegt ist, um

- eine lineare Überlagerung (I) des ersten Signals (S1) und des zweiten Signals (S2) zu generieren;
- in der linearen Überlagerung (I) mindestens einen lokalen Höhepunkt (I1) zu identifizieren;
- eine Entfernung (d1) zwischen dem Rasenmäherroboter (1) und dem erkannten Gegenstand (O) als eine Funktion des ersten (S1) und des zweiten (S2) Signals zu berechnen, wenn das zweite Signal (S2) das erste Signal (S1) umfasst;
- die lineare Überlagerung (I) als eine Funktion der Entfernung (d) zu generieren und
- in der linearen Überlagerung (I) mindestens einen lokalen Höhepunkt (I1) und mindestens eine entsprechende Entfernung (d1) zu identifizieren, wobei der Rasenmäherroboter (1) zudem eine Verarbeitungs- und Steuereinheit (16) umfasst, die mit dem Verarbeitungsmodul (142) gekoppelt ist oder diese umfasst, wobei die Verarbeitungs- und Steuereinheit (16) ausgelegt ist, um die Bewegungsmittel (12) und/oder die Schneidmittel (10) als eine Funktion der erkannten Anwesenheit von mindestens einem Gegenstand (O) zu steuern,

wobei die Verarbeitungs- und Steuereinheit (16) ausgelegt ist, um

- einen Einstellparameter (p1) als eine Funktion der berechneten Entfernung (d1) zu berechnen und
- eine Geschwindigkeit der Bewegungsmittel (12) als eine Funktion des Einstellparameters (p1) einzustellen, indem ein Signal für den Antrieb der Bewegungsmittel (12) mit dem Einstellparameter (p1) gewichtet wird, indem das Signal für den Antrieb der Bewegungsmittel (12) mit dem Einstellparameter (p1) multipliziert wird und/oder der Parameter (p1) auf lineare Weise zwischen einem unteren Wert und einem oberen Wert variiert, sodass eine Variation der Geschwindigkeit der Bewegungsmittel (12) stufenweise erfolgt.

2. Rasenmäherroboter (1) nach Anspruch 1, umfassend einen Schutz oder eine Abdeckung, der/die ausgelegt ist, um den Radarsensor (140) zwischen den Komponenten des Roboters (1) zu schützen und abzudecken.

3. Rasenmäherroboter (1) nach einem der vorhergehenden Ansprüche, wobei die Verarbeitungs- und Steuereinheit (16) ausgelegt ist, um

- eine Frequenzvariation einer Frequenz des zweiten Signals (S2) in Bezug auf eine Frequenz des ersten Signals (S1) zu erkennen und

- einen Ursprungswinkel des zweiten Signals (S2) als eine Funktion der gemessenen Frequenzvariation zu berechnen, wobei der Ursprungswinkel eine Position des mindestens einen Gegenstands (O) im Arbeitsbereich (A) angibt.

4. Verfahren zum Erkennen der Anwesenheit von mindestens einem Gegenstand (O) in einem Erkennungsbereich (C) vor einem Rasenmäherroboter (1) nach einem der vorhergehenden Ansprüche, umfassend einen Radarsensor (140), wobei das Verfahren Folgendes umfasst:

  - Übermitteln eines ersten elektromagnetischen Signals (S1);
  - Empfangen eines zweiten elektromagnetischen Signals (S2) und
  - Erkennen einer Anwesenheit eines Gegenstands (O), indem geprüft wird, ob das zweite Signal (S2) das erste Signal (S1) umfasst;
  - Generieren einer linearen Überlagerung (I) des ersten Signals (S1) und des zweiten Signals (S2);
  - Identifizieren mindestens eines lokalen Höhepunktes (I1) in der linearen Überlagerung (I);
  - Berechnen einer Entfernung (d1) zwischen dem Rasenmäherroboter (1) und dem erkannten Gegenstand (O) als eine Funktion des ersten (S1) und des zweiten (S2) Signals, wenn das zweite Signal (S2) das erste Signal (S1) umfasst;
  - Generieren der linearen Überlagerung (I) als eine Funktion der Entfernung (d) und
  - Identifizieren mindestens eines lokalen Höhepunktes (I1) und mindestens einer entsprechenden Entfernung (d1) in der linearen Überlagerung (I).

**Revendications**

1. Robot tondeuse à gazon (1), comprenant :

  - des moyens de coupe d'herbe (10) pour effectuer une opération de coupe d'herbe dans une zone de travail (A),
  - des moyens de déplacement (12) configurés pour déplacer de manière substantiellement autonome le robot tondeuse à gazon (1) le long d'une direction d'avance (X) à l'intérieur de ladite zone de travail (A),
  - un système de détection (14) configuré pour détecter la présence d'au moins un objet (O) dans une zone de détection (C) devant le robot tondeuse à gazon (1), et comprenant :

    - un capteur radar (140) configuré pour transmettre un premier signal électromagnétique (S1) et pour recevoir un deuxième signal électromagnétique (S2), et
    - un module de traitement (142), couplé au capteur radar (140) et configuré pour recevoir du capteur radar (140) ledit premier (S1) et ledit deuxième (S2) signal, et pour détecter la présence d'un objet (O) en vérifiant si le deuxième signal (S2) comprend ledit premier signal (S1),

le robot tondeuse à gazon (1) étant **caractérisé en ce que** ledit module de traitement (142) est configuré pour :

  - générer une convolution (I) du premier signal (S1) et du deuxième signal (S2),
  - identifier, dans la convolution (I), au moins un pic local (I1),
  - calculer une distance (d1) entre le robot tondeuse à gazon (1) et l'objet (O) détecté en fonction du premier (S1) et deuxième (S2) signal, si le deuxième signal (S2) comprend ledit premier signal (S1),
  - générer ladite convolution (I) en fonction de la distance (d), et
  - identifier, dans la convolution (I), au moins un pic local (I1) et au moins une distance correspondante (d1), le robot tondeuse à gazon (1) comprenant en outre une unité de traitement et de commande (16), couplée au ou comprenant le module de traitement (142), l'unité de traitement et de commande (16) étant configurée pour commander les moyens de déplacement (12) et/ou les moyens de coupe (10) en fonction de la présence détectée d'au moins un objet (O),

dans lequel l'unité de traitement et de commande (16) est configurée pour :

  - calculer un paramètre de réglage (p1) en fonction de la distance (d1) calculée, et
  - régler une vitesse des moyens de déplacement (12) en fonction du paramètre de réglage (p1) en pondérant un signal pour entraîner les moyens de déplacement (12) avec le paramètre de réglage (p1), multiplier ledit signal pour entraîner les moyens de déplacement (12) par le paramètre de réglage (p1), et/ou ledit paramètre (p1) variant de manière linéaire entre une valeur inférieure et une valeur supérieure, de manière à ce qu'une variation de la vitesse des moyens de déplacement (12) se produise de façon progressive.

2. Robot tondeuse à gazon (1) selon la revendication 1, comprenant une protection ou un couvercle configuré pour protéger et couvrir, entre les composants du robot (1), ledit capteur radar (140).

3. Robot tondeuse à gazon (1) selon l'une quelconque des revendications précédentes, dans lequel l'unité de traitement et de commande (16) est configurée pour :

- détecter une variation de fréquence d'une fréquence du deuxième signal (S2) par rapport à une fréquence du premier signal (S1), et
- calculer un angle d'origine du deuxième (S2) en fonction de ladite variation de fréquence mesurée, l'angle d'origine indiquant une position de l'au moins un objet (O) à l'intérieur de la zone de travail (A).

4. Procédé pour détecter la présence d'au moins un objet (O) dans une zone de détection (C) devant un robot tondeuse à gazon (1) selon l'une quelconque des revendications précédentes, comprenant un capteur radar (140), le procédé comprenant :

- transmettre un premier signal électromagnétique (S1),
- recevoir un deuxième signal électromagnétique (S2), et
- détecter la présence d'un objet (O) en vérifiant si le deuxième signal (S2) comprend ledit premier signal (S1),
- générer une convolution (I) du premier signal (S1) et du deuxième signal (S2),
- identifier, dans la convolution (I), au moins un pic local (I1),
- calculer une distance (d1) entre le robot tondeuse à gazon (1) et l'objet (O) détecté en fonction du premier (S1) et deuxième (S2) signal, si le deuxième signal (S2) comprend ledit premier signal (S1),
- générer ladite convolution (I) en fonction de la distance (d), et
- identifier, dans la convolution (I), au moins un pic local (I1) et au moins une distance correspondante (d1).

FIG. 2

FIG. 3

FIG. 1

FIG. 4

FIG. 5

FIG. 6

FIG. 7

FIG. 8

EP 3 794 921 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016057140 A1

- WO 2016057140 A